Europäisches Patentamt

European Patent Office

Office européen des brevets

(19)

(11) Numéro de publication : **0 324 427 B1**

(12) **FASCICULE DE BREVET EUROPEEN**

(45) Date de publication du fascicule du brevet :
**10.06.92 Bulletin 92/24**

(51) Int. Cl.⁵ : **G21C 7/36, G21C 7/12**

(21) Numéro de dépôt : **89100321.2**

(22) Date de dépôt : **10.01.89**

(54) **Procédé de rénovation de la commande des grappes de controle d'un réacteur nucléaire et commande correspondante.**

(30) Priorité : **13.01.88 FR 8800313**

(43) Date de publication de la demande :
**19.07.89 Bulletin 89/29**

(45) Mention de la délivrance du brevet :
**10.06.92 Bulletin 92/24**

(84) Etats contractants désignés :
**BE CH DE ES LI SE**

(56) Documents cités :
**FR-A- 2 407 603**
**US-A- 4 125 432**

(56) Documents cités :
**IEEE TRANSACTIONS ON POWER APPARATUS AND SYSTEMS, vol. PAS-102, no. 1, janvier 1983, pages 123-126, IEEE, New York, US; L.E.CROSSLEY et al.: "The development of a programmable controller system for use in Ontario hydro nuclear power plants"**
**IEE PROCEEDINGS, vol. 131, partie A, no. 7, septembre 1984, pages 481-515; M.W. JERVIS: "Control and instrumentation of largenuclear power stations. A review of future trends"**

(73) Titulaire : **FRAMATOME**
**Tour Fiat 1, Place de la Coupole**
**F-92400 Courbevoie (FR)**

(72) Inventeur : **Jahnke, Serge**
**7 Villa du Parc Montsouris**
**F-75014 Paris (FR)**
Inventeur : **Ple, Philippe**
**118 rue Salvador Allende**
**F-92000 Nanterre (FR)**

(74) Mandataire : **Weinmiller, Jürgen et al**
**Lennéstrasse 9 Postfach 24**
**W-8133 Feldafing (DE)**

EP 0 324 427 B1

**Description**

L'invention concerne un procédé de rénovation de la commande des grappes de contrôle d'un réacteur nucléaire doté de telles grappes, ainsi qu'une commande correspondant à la mise en oeuvre de ce procédé.

Les réacteurs nucléaires à eau ordinaire sous pression, employés pour la production d'énergie électrique, comportent des grappes de contrôle qui associent chacune une pluralité de barres d'absorption de neutrons. Ces barres permettent de moduler la puissance fournie par la réacteur en fonction de leur enfoncement à l'intérieur du coeur de ce dernier. Chaque grappe de contrôle est dotée d'un mécanisme de manoeuvre qui vient se placer sur la cuve du réacteur et qui permet un déplacement vertical de la grappe par rapport à cette cuve. La mécanisme de manoeuvre associé à chaque grappe est de type vérin et permet un déplacement pas à pas, il comporte trois bobines électromagnétiques sélectivement alimentées par autant de ponts d'alimentation, dits de puissance. Ces ponts sont regroupés dans des ensembles statiques de puissance qui sont pilotés à partir d'un pupitre par l'intermédiaire d'une logique de commande agissant sur les ponts d'alimentation au travers d'interfaces logiques placées dans les ensembles statiques de puissance. Pour des raisons de sécurité, les équipements et en particulier les ensembles statiques de puissance sont réalisées sous forme d'unités indépendantes les unes des autres.

Dans certains réacteurs nucléaires de production d'énergie en service, la logique de commande et les interfaces logiques sont réalisées sous forme câblée, alors que dans d'autres réacteurs plus modernes cette logique de commande et ces interfaces logiques sont sous forme programmée.

Les logiques câblées ne présentent pas la même souplesse que les logiques programmées lorsque des modifications d'exploitation sont nécessaires. Les interventions pour modification, entretien, ou dépannage en logique câblée nécessitent la mise hors service des équipements concernés pour des opérations manuelles sur site dont les durées sont sans comparaison avec les substitutions éventuelles de cartes de circuits qu'impliquent leurs équivalents en logique programmée.

Ceci est particulièrement important dans le domaine des réacteurs nucléaires de production d'énergie où l'on s'efforce de limiter au maximum les arrêts tant en durée qu'en nombre.

On cherche donc à affecter les interventions nécessaires en un minimum de temps au cours des arrêts obligatoires prévus pour les réacteurs.

A cet effet l'invention propose un procédé de rénovation de la commande des grappes de contrôle d'un réacteur nucléaire, doté de telles grappes, qui sont manoeuvrables par l'intermédiaire de mécanismes électromagnétiques dont les bobinages sont alimentés par des ponts, dits de puissance, pilotés par l'intermédiaire de ladite commande à partir d'un pupitre, celle-ci comportant une logique câblée de contrôle desservant le pupitre et supervisant une pluralité d'interfaces logiques câblées qui desservent elles-mêmes chacune un sous-groupe dans lequel sont rassemblés les ponts de puissance d'un nombre déterminé de grappes simultanément manoeuvrables.

Selon une caractéristique de l'invention, l'on substitue successivement et indépendamment à chaque ensemble statique de puissance, regroupement une interface logique câblée et les ponts de puissance d'au moins un sous-groupe qu'elle dessert, au moins un ensemble électronique de commande regroupant un ordinateur et les ponts de puissance d'un sous-groupe qu'il dessert, ledit ordinateur venant s'interconnecter à la manière d'une interface logique câblée d'une part aux ponts de puissance qu'il dessert, d'autre part à la logique câblée de contrôle.

L'invention propose également une commande de grappes de contrôle pour réacteur nucléaire obtenue par mise en oeuvre partielle du procédé défini ci-dessus.

Selon une autre caractéristique de l'invention, cette commande comporte parallèlement, d'une part des ensembles statiques de puissance regroupant chacun une interface logique câblée et les ponts de puissance qu'elle dessert, d'autre part des ensembles électroniques de commande regroupant chacun un ordinateur et les ponts de commande d'un sous-groupe, l'ordinateur de chaque ensemble électronique de commande étant interconnecté à la manière d'une interface logique câblée, par des circuits auxiliaires, d'une part aux ponts de puissance du sous-groupe qu'il dessert, d'autre part à la logique câblée de contrôlé pour permettre un fonctionnement normal de réacteur en phase de rénovation de ladite commande et en dehors des périodes d'arrêt où les substitutions d'ensembles électroniques de commande aux ensembles statiques de puissance sont possibles.

L'invention, ses caractéristiques et ses avantages sont précisés dans la description qui suit, en liaison avec les figures répertoriées ci-dessous.

La figure 1 présente une commande de grappes de contrôle de réacteur nucléaire selon l'art antérieur.

La figure 2 présente un synoptique d'une commande de grappes de contrôle en cours de rénovation selon le procédé de l'invention.

La figure 3 présente une commande de grappes de contrôle de réacteur nucléaire rénovée selon l'invention.

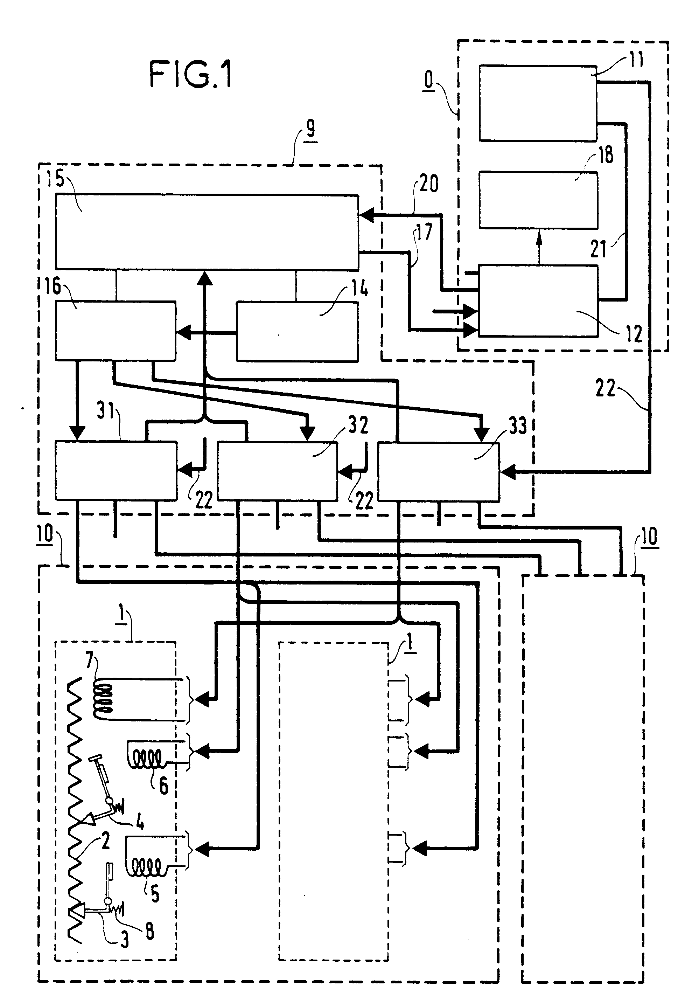

La commande de grappes de contrôle de réacteur nucléaire à eau ordinaire sous pression qui est présentée figure 1 est celle que l'on retrouve sur des réacteurs actuellement en exploitation. On se référera par exemple à l'article intitulé GENIE NUCLAIRE/TECHNOLOGIE DE CONSTRUCTION/EQUIPEMENT DU COEUR publié par M. P. BOIRON, en 1977, dans la collection des TECHNIQUES DE L'INGENIEUR, pour les détails non précisés ici sur le dispositif commandé.

De manière connue, de tels centraux comportent un nombre important de barres absorbantes assemblés en grappes indépendantes.

Chaque grappe est dotée d'un mécanisme électromagnétique 1 de manoeuvre qui permet de la déplacer verticalement par rapport à la cuve du réacteur au dessus de laquelle elle est située et où pénétrent les barres absorbantes qu'elle comporte.

Chaque mécanisme électromagnétique 1, qui est de type vérin manoeuvrable pas à pas, comporte une crémaillère 2 verticalement mobile en translation par rapport à la cuve du réacteur sous le contrôle de grappins 3, 4, actionnés au moyen d'électro-aimants 5, 6, 7. Les grappins sont de deux types, les uns 3 oscillants autour d'un axe fixe, les autres 4 oscillants et de plus verticalement mobiles en translation.

Les grappins 3, à axes fixes, sont classiquement disposés à cent vingt degrés l'un de l'autre autour de la crémaillère 2, à un même niveau horizontal situé sous celui des grappins 4, dits mobiles, seuls une partie de la crémaillère 2, un des grappins 3 et un des grappins 4 sont présentés figure 1. L'alimentation de l'électro-aimant 5 repousse le grappin 3 en fond de denture de crémaillère 2 bloquant cette dernière en translation. Le relâchement du grappin fixe 3, lorsque l'électro-aimant 5 n'est pas suffisamment alimenté, autorise le déplacement de la crémaillère dont la denture n'est plus immobilisée, le grappin 3 revenant en position rétractée sous l'action d'un ressort de traction 8. L'électro-aimant 6 agit sur le grappin mobile 4 comme l'électro-aimant 5 sur le grappin fixe 3.

L'électro-aimant 7 agit verticalement sur le grappin mobile 4 notamment lorsque ce dernier est placé en appui en fond de denture de crémaillère, il est apte à entraîner vers le haut ce grappin mobile et par conséquent la crémaillère et la grappe dont elle est solidaire, lorsqu'il est convenablement alimenté simultanément avec l'électro-aimant 6. Le relâchement de l'électro-aimant 7 alors que le grappin est en position haute et en fond de denture de crémaillère 2, permet la descente d'un pas de cette dernière.

Le processus de commande d'une crémaillère 2 implique donc une alimentation sélective des électro-aimants 5, 6, 7 selon un cycle donné, qui diffère suivant que la montée où la descente de la grappe solidaire de cette crémaillère est demandée.

Dans l'exemple de réalisation considéré, quatre mécanismes électro-magnétiques 1 sont simultanément commandés au travers d'une unité dénommé ensemble statique de puissance 9 apte à commander trois sous-groupes 10 de chacun quatre mécanismes 1 desservant eux-mêmes chacun une grappe de contrôle.

Un pupitre 11 permet le pilotage manuel et/ou automatique de l'alimentation des électro-aimants 5, 6, 7 des différents mécanismes de manoeuvre 1. Ce pupitre 11 est associé, à cet effet, à une logique câblée de contrôle 12 à laquelle sont reliés les différents ensembles statiques de puissance 9 qui se partagent l'alimentation de la pluralité de mécanismes électromagnétiques 1 du réacteur nucléaire considéré ; seul un ensemble statique de puissance 9 et l'un des mécanismes qu'il alimente sont représentés figure 1.

Un ensemble statique de puissance 9 comporte essentiellement :
- des ponts d'alimentation, dits de puissance, 31, 32, 33 pour les électro-aimants 5, 6, 7 des mécanismes de manoeuvre 1 desservis par cet ensemble ;
- un cycleur 14 chargé d'organiser les séquences d'alimentation des électro-aimants dans le temps pour permettre soit la montée, soit la descente des barres absorbantes des grappes d'un sous-groupe ;
- une interface logique câblée de contrôle 15 assurant la transmission des informations de commande et de compte-rendu de l'ensemble statique de puissance considéré avec la logique câblée de contrôle ;
- une interface de puissance 16 assurant les nécessaires adaptations de signaux entre l'interface logique câblée 15 et les ponts de puissance 31, 32, 33.

Les ponts de puissance sont rassemblés par groupes en fonction du rôle imparti aux électro-aimants qu'ils alimentent.

Un premier groupe de trois ponts de puissance 31 alimente les électro-aimants 5 actionnant les grappins fixes 3 des trois sous-groupes 10 dont l'ensemble statique de puissance 9 considéré à la charge. Un second et un troisième groupe de trois ponts de puissance 32, 33 ont respectivement même fonction vis-à-vis des électro-aimants 6 actionnant les grappins mobiles 4 des trois sous-groupes considérés ci-dessus et vis-à-vis des électro-aimants 7 de déplacement de ces grappins mobiles 4.

L'établissement, le réglage éventuel et la coupure des courants d'alimentation des électro-aimants 5, 6, 7 des trois sous-groupes 10 considérés sont sélectivement assurés par l'interface de puissance 16 qui reçoit à cet effet des commandes provenant du cycleur 14 chargé du minutage des différentes opérations.

Le cycleur 14 et l'interface de puissance sont supervisés par la logique câblée de contrôle 12 au travers de l'interface logique câblée 15. Cette dernière assure notamment le traitement des défauts concernant tant la partie logique que la partie puissance de l'ensemble statique de puissance 9 qui la comporte, elle assure la transmission des signalisations de défauts vers la logique câblée de contrôle 12, via une liaison 17. La logique câblée de contrôle 12 reçoit aussi, via la liaison 17, des indications d'affichage provenant de l'interface logique câblée 15 et concernant l'ensemble statique de puissance ; elle transmet ces indications pour affichage à un équipement de visualisation 18 relié à la logique câblée 12 et associé au pupitre 11 dans une salle de commande 0 du réacteur nucléaire.

La logique câblée de contrôle 12 assure la transmission des commandes émanant du pupitre 11 vers les interfaces logiques câblées, telle l'interface 15, par une liaison multifilaire 20.

A cet effet, elle est reliée au pupitre 11 par une liaison multifilaire 21. Les opérations de sélection des sous-groupes sont assurées au niveau de la logique câblée de contrôle 12 qui assure un affichage sur l'équipement de visualisation à partir des informations collectées au niveau des ponts de puissance 31, 32, 33. Les opérations de recalage des barres de contrôle 1 s'effectuent par action directe du pupitre sur les ponts de puissance qui agissent sur les électro-aimants 5, 6 et 7, via une liaison 22.

Comme indiqué plus haut la logique câblée de contrôle et les interfaces logiques câblées ne permettent généralement pas les modifications, en dehors des périodes d'arrêt du réacteur.

On évite d'arrêter un réacteur pour des modifications si celle-ci peuvent être effectuées lors des arrêts programmés du réacteur. Dans le cas envisagé la durée des interventions nécessaires ne permet pas la rénovation totale en une seule étape de la commande de grappes d'un réacteur.

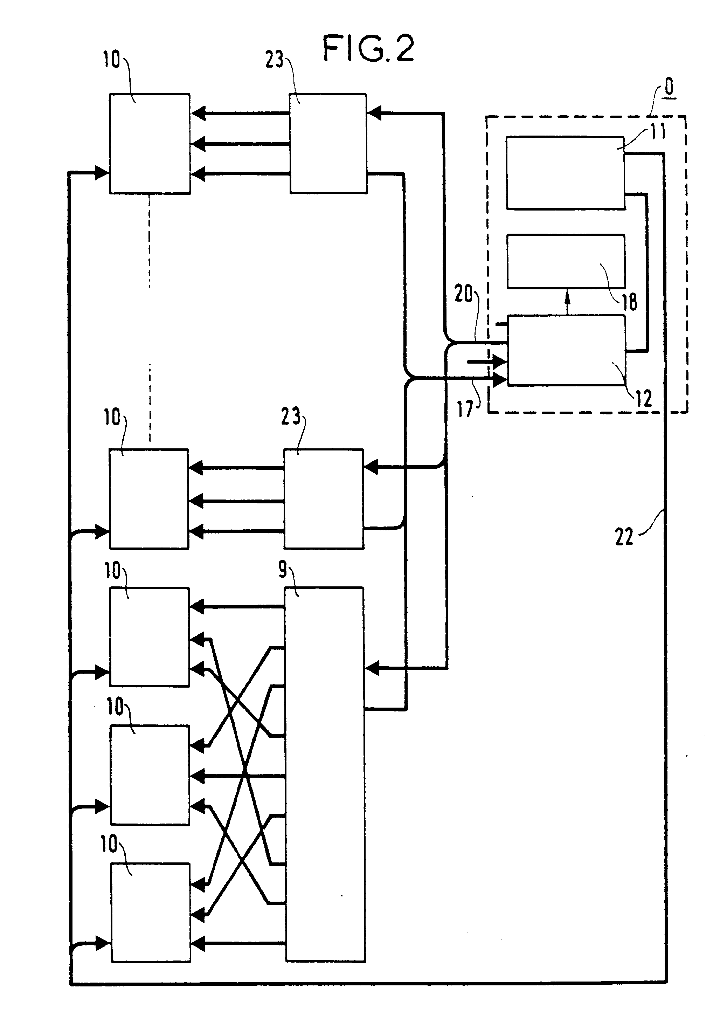

Selon l'invention on s'arrange donc pour obtenir une organisation telle que symbolisée sur la figure 2 pour la commande de grappes d'un réacteur en phase de rénovation.

A cet effet on interpose successivement un ensemble électronique de commande 23 entre chaque sous-groupe 10 et la logique câblée de contrôle 12 qui les supervise, en remplacement de l'ensemble statique de puissance 9 qui auparavant pilotait ce sous-groupe 10.

Dans une forme préférée de réalisation l'armoire non figurée contenant un ensemble statique de puissance 9, jusqu'alors en service, est vidée, durant un arrêt programmé du réacteur, sans que ne soit modifié le câblage reliant cette armoire d'une part aux sous-groupes 10 anciennement desservis par cet ensemble statique de puissance et d'autre part à la logique câblée de contrôle 12. On remplit alors une partie de la place laissée libre dans l'armoire par trois ensembles électroniques de puissance 23 que l'on raccorde d'une part aux liaisons 17 et 20 du câblage connecté à la logique câblée de contrôle 12, d'autre part chacun à un des sous-groupes 10 précédemment desservi par l'ensemble statique de puissance 9 ôté.

Pendant les phases de fonctionnement, entre arrêts du réacteur, au cours d'une rénovation de la commande de grappes, cette dernière comporte donc des sous-groupes supervisés par la logique câblée de contrôle 12 par l'intermédiaire d'ensembles électroniques de commande 23 et d'autres supervisés par l'intermédiaire d'ensembles statiques de puissance 9.

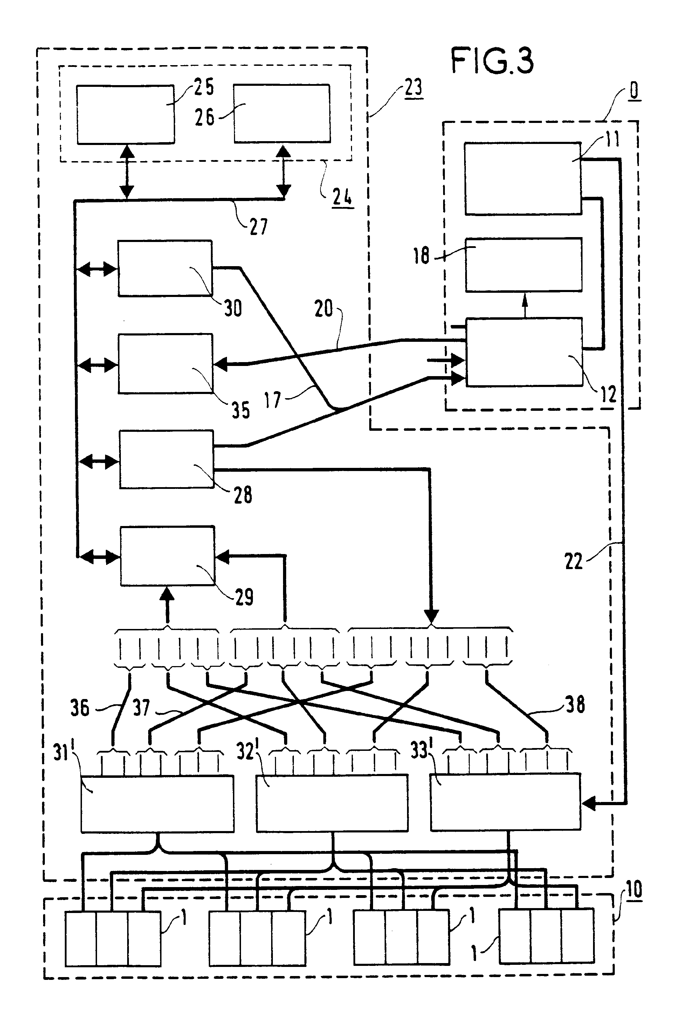

Dans l'exemple de réalisation proposé, tel que représenté en figure 3 un ensemble électronique de commande 23 est organisé autour d'un ordinateur 24 et de ses auxiliaires lui permettant de servir d'interface entre des ponts de puissance pour un sous-groupe 10 et la logique câblée de contrôle 12 dont dispose le réacteur concerné.

Les ponts de puissance 31′, 32′, 33′ nécessaires sont identiques ou préférablement améliorés par rapport aux ponts de puissance 31, 32, 33 qu'ils remplacent, ils sont destinés à assurer les mêmes opérations sur les mêmes bobinages d'électro-aimants 5, 6, 7 que ceux-ci.

L'ordinateur 24 est classiquement composé d'un processeur 25 usuel auquel est associé un ensemble de mémoires mortes et vives 26 avec lequel il communique par l'intermédiaire d'un bus 27. Le microprocesseur 25 communique avec les ponts de puissance 31′, 32′, 33′ par l'intermédiaire de cartes d'interface de sortie 28 et d'entrée 29 via le bus 27, il communique aussi avec la logique câblée de commande 12 par l'intermédiaire d'une carte interface d'affichage 30, de la carte d'interface de sortie 29 et d'une carte d'interface de logique 35, via le bus 27.

Les commandes émanant du pupitre 11, via la logique câblée de commande 12, sont transmises à l'ordinateur 24 par la carte interface de logique 35, via d'une part la liaison multifilaire 20 d'autre part le bus 27. La carte interface de logique 35 assure les nécessaires adaptations des signaux fournis par la logique câblée pour produire des signaux numériques acceptables par l'ordinateur. La carte interface d'affichage effectue une adaptation inverse pour les signaux à transmettre par la liaison 17 vers logique câblée de commande 12 de même que la carte de sortie 28 pour les signaux notamment de signalisation de défaut à transmettre par la liaison 17 vers cette même logique 12. L'ordinateur 24 remplace le cycleur 14 pour le séquencement des alimentations des électro-aimants par les ponts de puissance 31′, 32′, 33′.

A cet effet, sur ordre émanant du pupitre 11, via la logique câblée de commande 12, l'ordinateur 24 génère des signaux numériques de commande à destination de la carte d'interface de sortie 28 qui les transforme en signaux de type binaire à destination des ponts de puissance 31′, 32′, 33′ via les liaisons référencées 38. Les ponts de puissance fournissent, sous forme analogique et via des liaisons référencées 37, des indications sur les courants circulant dans les bobines des électro-aimants, ces indications sont transmises à la carte d'interface d'entrée 29 qui les numérise en vue de leur transmission à l'ordinateur 24 et/ou à la logique câblée de commande 12 pour traitement et prise en compte.

La carte d'interface d'entrée 29 reçoit également des indications de type tout ou rien qui sont transmises par les ponts de puissance notamment en cas de défaut ou de test, via les liaisons ici référencées 36.

La carte d'affichage 30 permet la communication d'informations à l'opérateur par l'ensemble électronique de commande 23, qui la comporte, par l'intermédiaire de la logique câblée de commande 12 et des organes d'affichage non représentés qui comporte le pupitre 11.

## Revendications

1. Procédé de rénovation de la commande des grappes de contrôle d'un réacteur doté de telles grappes qui sont manoeuvrables par l'intermédiaire de mécanismes électromagnétiques (1) dont les bobinages sont alimentés par des ponts de puissance (31, 32, 33) pilotés par l'intermédiaire de ladite commande à partir d'un pupitre (11), celle-ci comportant une logique câblée de contrôle (12) desservant le pupitre et supervisant une pluralité d'interfaces logiques câblées (15) qui desservent chacune au moins un sous-groupe (10) dans lequel sont rassemblés les mécanismes électromagnétiques de manoeuvre (1) d'un nombre déterminé de grappes simultanément manoeuvrables, caractérisé en ce que l'on substitue successivement et indépendamment à chaque ensemble statique de puissance (9), regroupant une interface logique câblée (15) et les ponts de puissance (31, 32, 33) d'au moins un sous-groupe qu'elle dessert, au moins un ensemble électronique de commande (23) regroupant un ordinateur (24) et les ponts de puissance (31', 32', 33') d'un sous-groupe qu'il dessert, ledit ordinateur venant s'interconnecter par des circuits auxiliaires (28, 29, 30, 35) à la manière d'une interface logique câblée d'une part aux ponts de puissance, d'autre part à la logique câblée de contrôle.

2. Commande de grappes de contrôle d'un réacteur doté de telles grappes qui sont manoeuvrables par l'intermédiaire de mécanismes électromagnétiques (1) dont les bobinages sont alimentés par des ponts de puissance (31, 32, 33) pilotés à partir d'un pupitre (11) par l'intermédiaire d'une logique câblée de contrôle (12) desservant le pupitre et supervisant une pluralité d'interfaces logiques câblées (15) qui desservent chacune au moins un sous-groupes (10) dans lequel sont rassemblés les ponts de puissance d'un nombre déterminé de grappes simultanément manoeuvrables, caractérisé en ce qu'elle comporte parallèlement d'une part des ensembles statiques de puissance (9) regroupant chacun une interface logique câblée (15) et les ponts de puissance (31, 32, 33) qu'elle dessert d'autre part des ensembles électroniques de commande (23) regroupant chacun un ordinateur (24) et les ponts de puissance (31', 32', 33') d'un sous-groupe (1), l'ordinateur de chaque ensemble électronique de commande étant interconnecté à la manière d'une interface logique câblée et par des circuits auxiliaires (28, 29, 30, 35), d'une part aux ponts de puissance, d'autre part à la logique câblée de contrôle, pour permettre un fonctionnement normal du réacteur en phase de rénovation de la commande et en dehors des périodes d'arrêt où les substitutions d'ensembles électroniques de commande aux ensembles statiques de puissance sont possibles.

## Patentansprüche

1. Verfahren zur Erneuerung der Steuerung der Regelstabbündel eines mit solchen Bündeln ausgerüsteten Reaktors, wobei die Bündel durch elektromagnetische Mechanismen (1) betätigbar sind, deren Wicklungen von Leistungsversorgungsbrücken (31, 32, 33) gespeist werden, die durch die Steuerung von einem Pult (11) aus angesteuert werden, wobei die Steuerung eine verdrahtete Steuerlogik (12) aufweist, welche das Pult bedient und eine Vielzahl von verdrahteten logischen Schnittstellen (15) überwacht, die je mindestens eine Untergruppe (10) betreuen, in welcher die elektromagnetischen Betätigungsmechanismen (1) einer bestimmten Anzahl von gleichzeitig betätigbaren Bündeln zusammengefaßt sind, dadurch gekennzeichnet, daß man nacheinander und getrennt jede statische Leistungsversorgungsgruppe (9), die eine verdrahtete logische Schnittstelle (15) sowie die Leistungsversorgungsbrücken (31, 32, 33) mindestens einer der von der Schnittstelle bedienten Untergruppen zusammenfaßt, durch mindestens eine elektromagnetische Steuerung (23) ersetzt, die einen Rechner (24) sowie die von ihm bedienten Leistungsversorgungsbrücken (31', 32', 33') einer Untergruppe umfaßt, wobei der Rechner durch Hilfskreise (28, 29, 30, 35) nach Art einer verdrahteten logischen Schnittstelle einerseits mit den genannten Brücken und andererseits mit der verdrahteten Steuerlogik verbunden wird.

2. Steuerung für die Regelstabbündel eines mit solchen Bünden ausgerüsteten Reaktors, wobei die Bündel durch elektromagnetische Mechanismen (1) betätigbar sind, deren Wicklungen von Leistungsversorgungsbrücken (31, 32, 33) gespeist werden, die von einem Pult (11) aus über eine verdrahtete Steuerlogik (12) angesteuert werden, die das Pult bedient und mehrere verdrahtete logische Schnittstellen (15) überwacht, die je mindestens eine Untergruppe (10) bedienen, in welcher die Leistungsversorgungsbrücken einer bestimmten Anzahl von gleichzeitig betätigbaren Bündeln vereinigt sind, dadurch gekennzeichnet, daß die Steuerung in Parallelschaltung zum einen statische Leistungsversorgungsgruppen (9), die je eine verdrahtete logische Schnittstelle (15) sowie die von ihr bedienten Leistungsversorgungsbrücken (31, 32, 33) umfassen, und zum anderen elektronische Steuergruppen (23) aufweist, die je einen Rechner (24) sowie die Leistungsversorgungsgruppen (31′, 32′, 33′) einer Untergruppe umfassen, wobei der Rechner jeder elektronischen Steuergruppe nach Art einer verdrahteten logischen Schnittstelle und durch Hilfskreise (28 29, 30, 35) einerseits mit den Leistungsversorgungsbrücken und andererseits mit der verdrahteten Steuerlogik verbunden ist, um ein normales Funktionieren des Reaktors während der Erneuerungsphase der Steuerung und außerhalb der Stillstandsperioden zu ermöglichen, in denen das Ersetzen der statischen Leistungsversorgungsgruppen durch elektronische Steuergruppen möglich ist.

## Claims

1. A method of renovating the control system for controlling control clusters in a reactor provided with such clusters which are operated by means of electromagnetic mechanisms (1) whose coils are powered by power bridges (31, 32, 33) which are controlled through said system from a control desk (11), said system including a hard-wired logic control circuit (12) serving the desk and supervising a plurality of hard-wired logic interfaces (15) each of which serves at least one subgroup (10) constituted by the electromagnetic operating mechanisms (1) of a predetermined number of simultaneously operable clusters, characterized in that each static power assembly (9) constituted by a hard-wired logic interface (15) and the power bridges (31, 32, 33) of at least one subgroup served thereby is successively and independently replaced by at least one electronic control assembly (23) constituted by a computer and the power bridges (31′, 32′, 33′) of a subgroup served thereby, said computer being branched via peripheral circuits (28, 29, 30, 35) firstly with the power bridges and secondly the hard-wired control logic in a manner which simulates a hard-wired logic interface.

2. A control system for controlling control clusters in a reactor provided with such clusters which are operated by means of electromagnetic mechanisms (1) whose coils are powered by power bridges (31, 32, 33) which are controlled from a control desk (11) via a hard-wired logic control circuit (12) serving the desk and supervising a plurality of hard-wired logic interfaces (15) each of which serves at least one subgroup (10) constituted by a predetermined number of simultaneously operable clusters, characterized in that it comprises, in parallel, firstly static power assemblies (9) each constituted by a hard-wired logic interface (15) and the power bridges (31, 32, 33) served thereby, and secondly electronic control assemblies (23) each constituted by a computer (24) and the power bridges (31′, 32′, 33′) of a subgroup (1), the computer of each electronic control assembly being interconnected like a hard-wired logic interface and via peripheral circuits (28, 29, 30, 35), firstly to the power bridges, and secondly to the hard-wired logic control circuit, thereby enabling the reactor to operate normally while its control system is being renovated between shut-down periods during which it is possible to replace static power assemblies by electronic control assemblies.

# FIG.1

# FIG.2

# FIG.3